# EUROPÄISCHE PATENTSCHRIFT

(11) **EP 2 643 716 B1**
(45) Veröffentlichungstag und Bekanntmachung des Hinweises auf die Patenterteilung: **09.01.2019**
(21) Anmeldenummer: 11794025.4
(22) Anmeldetag: 18.11.2011
(51) Int. Cl.: G02B 5/124, B42D 15/00, B44F 1/10

(54) **REFLEKTIERENDES SICHERHEITSELEMENT FÜR SICHERHEITSPAPIERE, WERTDOKUMENTE ODER DERGLEICHEN**
REFLECTIVE SECURITY ELEMENT FOR SECURITY PAPERS, VALUE DOCUMENTS OR THE LIKE
ÉLÉMENT DE SÉCURITÉ RÉFLÉCHISSANT POUR PAPIERS DE SÉCURITÉ, DOCUMENTS DE VALEUR OU SIMILAIRE

(30) Priorität: 26.11.2010 DE 102010052665
(43) Veröffentlichungstag der Anmeldung: 02.10.2013
(73) Patentinhaber: Giesecke+Devrient Currency Technology GmbH, 81677 München (DE)
(72) Erfinder: LOCHBIHLER, Hans, 80337 München (DE)
(86) Internationale Anmeldenummer: PCT/EP2011/005821
(87) Internationale Veröffentlichungsnummer: WO 2012/069163

(56) Entgegenhaltungen:
- WO-A1-00/72275
- US-A1- 2007 098 959

## Beschreibung

Die Erfindung bezieht sich auf ein Sicherheitselement zur Herstellung von Wertdokumenten wie Banknoten, Schecks oder dergleichen, das eine Oberseite aufweist, auf der eine Mikrokavitätenstruktur ausgebildet ist, die eine Vielzahl nebeneinanderliegender, als Retroreflektoren ausgebildeter Mikrokavitäten aufweist, wobei auf den Mikrokavitäten eine einen Farbeffekt bewirkende Struktur ausgebildet ist.

Die Erfindung bezieht sich weiter auf ein Wertdokument mit einem solchen Sicherheitselement.

Die Erfindung bezieht sich auf ein Herstellungsverfahren für ein Sicherheitselement für Wertdokumente, wie Banknoten, Schecks oder dergleichen, wobei ein Substrat bereitgestellt wird, das eine Oberseite aufweist, auf der Oberseite eine Mikrokavitätenstruktur ausgebildet wird, die eine Vielzahl nebeneinanderliegender, als Retroreflektoren ausgebildeter Mikrokavitäten aufweist, und auf den Mikrokavitäten eine einen Farbeffekt bewirkende Struktur ausgebildet wird.

Für Sicherheitselemente ist es bekannt, Retroreflektoren vorzusehen. Solche Retroreflektoren haben eine große Winkeltoleranz in der Lichtreflexion und damit ausgestattete Oberflächen erscheinen für einen Betrachter heller als glatte spiegelnde Oberflächen. Diese reflektieren das Licht nur unter ihrem Glanzwinkel, und eine glatte reflektierende Probe erscheint hell, wenn sich die Beleuchtungsquelle im Auge des Betrachters spiegelt bzw. das Licht über Streuung an der Umgebung zum Auge des Betrachters gelangt. Ist diese Bedingung nicht erfüllt, erscheint die Oberfläche dunkel. Der visuelle Eindruck einer solchen Oberfläche hängt also sehr stark von der Art und der Position der Beleuchtungsquelle und vom Winkel zwischen Beleuchtungsquelle und Betrachter ab.

Es sind Retroreflektoren bekannt, die das einfallende Licht sehr effizient in seine Einfallsrichtung zurückleiten. Sie finden beispielsweise Verwendung bei Straßenbegrenzungspfosten oder Straßenschildern. Bestimmte tetraederförmig strukturierte Oberflächen zeigen eine hohe Lichtausbeute in einem relativ großen Winkelbereich, exemplarisch sei auf die US 3712706 verwiesen.

Auch ist es bekannt, mittels sphärischer Kugeln Retroreflektoren auszubilden, die mit einer Interferenzbeschichtung versehen sind, vergleiche WO 2009/105142 A2. Die Beschichtung dieser sphärischen Kugeln, die auch als Mikrosphären bezeichnet werden, kann so ausgelegt werden, dass ein Colour-Shift-Effekt an der reflektierten Strahlung auftritt. Dadurch kann die Farbe des reflektierten Lichtes gegenüber der Farbe des einfallenden Lichtes verändert werden, wie es beispielsweise in der WO 2005/066667 A1 beschrieben ist.

Auch wurden Retroreflektoren vorgeschlagen, bei denen ein Teil des einfallenden Lichtes eine Phasenverschiebung erleidet, wodurch sich ebenfalls die Farbe des reflektierten Lichtes ändert (siehe EP 0905530 A2).

Retroreflektoren mit identischen dreidimensionalen Strukturelementen, welche um 45° zur Oberfläche geneigte Seitenflächen besitzen, sind in der EP 1434695 B1 zur Realisierung maschinell lesbarer optischer Merkmale beschrieben.

Auch kann man Retroreflektoren mit dielektrischen Mehrschichtstrukturen bedampfen, die Farbmischung in der Reflexion zeigen (vergleiche M. Kolle et al., "Mimicking the colourful wing scale structure of the Papilio blumei butterfly", Nature Nanotechnology Letters, DOI: 10.1038/NNANO.2010.101, 2010).

Die EP 146325 A2 schließlich beschreibt ein Sicherheitselement der eingangs genannten Art, das eine Retroreflektorstruktur aufweist, welche aus Tetraedern aufgebaut ist. Die Seitenflächen der Tetraeder sind mit einer Feinstruktur versehen, welche eine Farb- oder Polarisationsänderung des einfallenden Lichtes bei der Reflexion bewirken.

Die WO 00/72275 A1 und die US 2007/098959 A1 offenbaren Sicherheitselemente mit Vertiefungen, auf denen eine Schicht mit einfallswinkelabhängiger Dispersion angeordnet ist.

Der Erfindung liegt die Aufgabe zugrunde, ein Sicherheitselement hinsichtlich seiner Fälschungssicherheit weiterzubilden.

Diese Aufgabe wird mit einem Sicherheitselement gemäß Anspruch 1 gelöst. Die Mikrokavitäten sind jeweils so ausgebildet, dass sie einen ersten Bereich, in dem auf die Oberseite einfallende Strahlung einfach reflektiert wird, und einen zweiten Bereich aufweisen, in dem auf die Oberseite einfallende Strahlung mehrfach reflektiert wird, wobei die den Farbeffekt bewirkende Struktur eine einfallswinkelabhängige Dispersion aufweist, so dass am ersten Bereich einfach-reflektierte Strahlung von der Oberseite gesehen einen anderen Farbeffekt bewirkt, als am zweiten Bereich mehrfach-reflektierte Strahlung.

Die Aufgabe wird weiter gelöst mit einem Herstellungsverfahren gemäß Anspruch 9. Die Mikrokavitäten werden jeweils so ausgebildet, dass sie einen ersten Bereich, in dem auf die Oberseite einfallende Strahlung einfach reflektiert wird, und einen zweiten Bereich aufweisen, in
dem auf die Oberseite einfallende Strahlung mehrfach reflektiert wird, wobei die den Farbeffekt bewirkende Struktur mit einer einfallswinkelabhängigen Dispersion versehen wird, so dass am ersten Bereich einfach reflektierte Strahlung von der Oberseite gesehen einen anderen Farbeffekt bewirkt, als am zweiten Bereich mehrfach reflektierte Strahlung.

Die Aufgabe wird schließlich ebenfalls mit einem Wertdokument gelöst, das ein erfindungsgemäßes Sicherheitselement aufweist.

Die Mikrokavitätenstruktur weist also Retroreflektoren auf, die zwei Bereiche umfassen, welche jeweils für sich die Strahlung retroreflektieren. Dabei wird das einfallende Licht im ersten Bereich jeder Mikrokavität einfach und im zweiten Bereich, der in der Regel vom restlichen Bereich der Mikrokavität gebildet wird, mehrfach reflektiert, in der Regel zweimal. Bildet man beispielsweise die Mikrokavitäten als sphärische Mikrokavitäten aus, wird im Zentrum der Sphäre das einfallende Licht durch eine einfache Reflexion in Strahlquellenrichtung zurückgeworfen. Am Rand der Sphäre auftreffende Strahlung wird hingegen zum gegenüberliegenden Rand umgelenkt und von dort zur Strahlquelle zurückreflektiert.

Unter "Retroreflexion" wird hier ein Zurückwerfen der einfallenden Strahlung in die Einfallsrichtung verstanden. Diese Eigenschaft ist über einen gewissen Einfallswinkelbereich gegeben, z. B. ± 10° oder mehr.

In den zwei Bereichen trifft dadurch die Strahlung mit unterschiedlichem Winkel auf die Oberfläche der Mikrokavität. Im ersten Bereich, in dem nur eine Reflexion stattfindet, trifft die Strahlung weitgehend senkrecht auf die Oberfläche. Im zweiten Bereich typischerweise mit einem Einfallswinkel von mindestens 45°. Da die Dispersion der den Farbeffekt bewirkenden Struktur vom Einfallswinkel abhängt, stellt sich nun in den beiden Bereichen ein unterschiedlicher Farbeffekt ein. Übliche Colour-Shift-Beschichtungen zeigen unterschiedliche Farben bei einer Variation des Betrachtungswinkels, also des Einfallswinkels der Strahlung auf die Beschichtung. Eine solche Beschichtung zeigt bei senkrechtem Einfallswinkel eine bestimmte Farbe, die sich mit dem Verkippen der Fläche, also mit Variation des Einfallswinkels ändern. Bekannte Colour-Shift-Beschichtungen weisen beispielsweise eine halbtransparente Metallschicht, eine metallische Spiegelschicht und dazwischen eine dielektrische Abstandschicht auf.

Dadurch ergibt sich zwischen den zwei Bereichen ein hoher Farbkontrast. In den ersten Bereichen, in denen eine Einfachreflexion der Strahlung stattfindet, stellt sich ein Farbeffekt ein, der sich deutlich von dem der zweiten Bereiche, in dem die Strahlung mehrfach reflektiert wird und damit unter anderen Einfallswinkeln auf die Oberfläche trifft, unterscheidet.

Die Ausbildung der Bereiche, insbesondere ihre Geometrie, die sie bei Aufsicht auf die Oberfläche haben, hängt nun wesentlich von der Art der Vertiefung der Mikrokavitäten ab. Die Abmessung der Mikrokavitäten in Draufsicht wie auch ihre Tiefe, d. h. ihre Erstreckung senkrecht zur Oberfläche, wirken sich auf die Größe der Bereiche aus. Eine Variation der Tiefe verändert das Flächenverhältnis von erstem und zweitem Bereich.

Die einzelnen Flächen dieser beiden Bereiche sind bevorzugt so klein gewählt, dass sie von einem Betrachter nicht aufgelöst werden können. Dann nimmt ein Betrachter diese lateral nebeneinander angeordneten Bereiche als Mischfarbe wahr. Durch die Variation der Fläche dieser nebeneinanderliegenden Bereiche kann daher eine Mischfarbe nahezu stufenlos zwischen den beiden vorliegenden Grundfarben in den Bereichen der Einfach- und den Bereichen der Mehrfachreflexion gewählt werden.

Bildet man die Strukturweite bzw. die Rasterweite der einzelnen Mikrokavitäten in einer Größe zwischen 2 µm und 300 µm aus, wird eine einzelne Mikrokavität vom unbewaffneten Auge nicht mehr optisch aufgelöst, sondern erscheint als einzelnes Farbpixel. Je nach Flächenverhältnis von erstem und zweitem Bereich eines Pixels ergibt sich damit eine unterschiedliche Mischfarbe, die für jedes Pixel aus der Farbe, die sich im ersten Bereich einstellt, und der Farbe, die der zweite Bereich bewirkt, gemischt ist. Die Variation der Tiefe der Vertiefung jeder Mikrokavität stellt den Flächenanteil ein und damit die Mischfarbe. Für die Gestaltung eines Sicherheitselementes ist es bevorzugt, unterschiedliche Formen von Mikrokavitäten vorzusehen und damit die Farbe, mit der die einzelnen Mikrokavitäten oder Pixel wahrgenommen werden, einzustellen. Unter Herstellgesichtspunkten ist dabei bemerkenswert, dass sich die Oberflächenbeschichtung für die Mikrokavitäten nicht ändern muss. Sie kann identisch sein, und dennoch wird ein unterschiedlicher Farbeindruck für Mikrokavitäten mit verschiedenen Vertiefungen erreicht.

Die Geometrie der Vertiefungen ist dabei keinesfalls auf rotationssymmetrische Formen oder Formen, die in Draufsicht einen kreisförmigen Umriss haben, beschränkt. Asphären oder Freiformflächen, wie sie z. B. von Lampenreflektoren bekannt sind, können verwendet werden. Insbesondere können auch rinnenförmige Vertiefungen verwendet werden, die beispielsweise die Form eines Halbzylinders haben, welcher nur in einer Schnittebene gekrümmt, in der anderen jedoch längs erstreckt ist. Solche asymmetrisch ausgebildeten Mikrokavitäten haben zugleich eine Polarisationswirkung für die im zweiten Bereich mehrfach reflektierte Strahlung. TM polarisiertes Licht zeigt bei einem schrägen Einfallswinkel im Allgemeinen eine geringere Reflexion als TE polarisierte Strahlung. Dies kann für einen Farbeffekt ausgenutzt werden, da die Struktur unterschiedliche Farbe zeigt, wenn das reflektierte Licht durch einen Polarisator betrachtet wird. Die Farbe verändert sich, wenn der Polarisator gedreht wird.

Verwendet man in der Mikrokavitätenstruktur Mikrokavitäten, welche nur in einer Raumebene eine retroreflektierende Strahlumlenkung verursachen, erhält man eine Vielzahl von optischen Gestaltungsmöglichkeiten. Beispielsweise ist ein zweifarbiges Muster möglich, das bei einer Drehung des Musters in der Bildebene um 90° seine Farben vertauscht. Hierzu muss das Muster und sein Hintergrund sich hinsichtlich der Hauptrichtung unterscheiden, längs der sich die nicht rotationssymmetrischen Mikrokavitäten erstrecken. Das Muster und sein Hintergrund bilden damit zwei Bezirke. In einer ersten Orientierung erscheint das Muster in einer ersten Farbe und der Hintergrund in einer zweiten, beispielsweise das Muster in Blau und der Hintergrund in Gelb. Dreht man nun das Sicherheitselement in der Bildebene, d. h. rotiert es um die optische Achse der Betrachtung, vertauschen sich die Farben und das Muster erscheint in der zweiten Farbe, der Hintergrund hingegen in der ersten.

Solche Effekte sind für andere Strukturen bereits bekannt, die jedoch hochbrechende Beschichtungen von Subwellenlängengittern und damit einen großen Herstellungsaufwand erfordern. Der Aufbau eines solchen Effektes mittels einer Mikrokavitätenstruktur, welche eine Vielzahl von Retroreflektoren realisiert, ist hingegen sehr viel einfacher herstellbar und zudem auch noch kontraststärker. Aufgrund der das Licht fokussierenden Wirkung der Retroreflektoren ist die Farbintensität des Wechsels deutlich höher und kann somit von einem Betrachter einfacher wahrgenommen werden. Eine höhere Fälschungssicherheit für ein Sicherheitselement bei zugleich einfacherer Herstellung ist die Folge.

Die nur in einer Richtung retroreflektierenden Strukturen können natürlich auch als Pixel ausgebildet werden, d. h. ihre Ausdehnung überschreitet in keiner Richtung 300 µm. Die Orientierung und/oder Geometrie der Strukturen kann dann für jedes Pixel individuell unterschiedlich sein.

Bei der Wahl einer halbtransparenten oder auch rein dielektrischen Beschichtung für die den Farbeffekt bewirkende Struktur, kann auch Transluzenz als optischer Effekt benutzt werden, um das Sicherheitselement zu kennzeichnen. Bringt man ein solches Muster auf eine zuvor bedruckte Fläche auf, ist die Druckfläche unter den Winkeln, bei denen keine Retroreflexion zum Betrachter stattfindet, gut zu erkennen. Bei Betrachtung des Musters im Retroreflexionswinkelbereich dominiert hingegen das Muster des Retroreflektors und die dahinter liegende Druckfläche wird nicht oder nur schwer sichtbar.

Der oben erwähnte Farbwechsel zwischen Motiv und Hintergrund ist besonders stark ausgebildet, wenn die Hauptachsen der nicht rotationssymmetrischen Mikrokavitäten senkrecht zueinander stehen. Unterschiedliche Orientierungen nicht rotationssymmetrischer Mikrokavitäten sind jedoch nicht hierauf beschränkt. Durch eine kontinuierliche Variation der Orientierung der Hauptrichtung der nicht rotationssymmetrischen Mikrokavitäten können auch Pump- und Laufeffekte realisiert werden. Solche Bewegungsmuster ziehen besondere Aufmerksamkeit eines Betrachters auf sich und eignen sich daher besonders als einfach erkennbare Merkmale zur Authentifizierung eines Sicherheitselementes. Beim Kippen solcher Muster ergeben sich lateral bewegliche Farbveränderungen in den durch die Mikrokavitäten gebildeten Strukturen.

Ferner können durch nicht rotationssymmetrische Mikrokavitäten mit unterschiedlicher Orientierung auch Effekte realisiert werden, die ein Betrachter als dreidimensionale Objekte wahrnimmt. Hierzu kann die Höheninformation bzw. die Distanz des wiederzugebenden Objektes zum Betrachter durch den Orientierungswinkel solcher Mikrokavitäten codiert werden. In diesem Fall nimmt ein Betrachter eine lateral unterschiedliche Parallaxe in der ebenen, mit Mikrokavitäten strukturierten Oberfläche wahr. Der räumliche Eindruck kann verstärkt werden, indem bei der Herstellung des Retroreflektors zusätzlich die Strukturtiefe der Mikrokavitäten als Funktion der Höhe bzw. der Reflexionseigenschaften des Objektes variiert wird. Ein räumlicher Eindruck lässt sich ebenfalls erzielen, wenn das Intensitätsprofil des Objektes pixelweise in solche Mikrokavitäten mit codiertem Orientierungswinkel umgesetzt wird.

Schließlich ist der Querschnitt der rinnenförmigen Mikrokavitäten nicht auf symmetrische Geometrien beschränkt. Asymmetrische Geometrien können durch einen ,Blaze' Effekt eine Lichtbündelung in die Richtung eines Betrachters erzeugen. Dadurch kann die vom Betrachter wahrgenommene Lichtausbeute erhöht werden.

Für das erfindungsgemäße Herstellungsverfahren kommen insbesondere Direktbelichtungstechniken, z. B. mithilfe eines Laserwriters infrage. Die Herstellung kann analog zu dem bekannten Herstellungsverfahren für Mikrolinsen erfolgen. Das Original der Mikrokavitätenstruktur wird über Direktbelichtung mithilfe eines Laserwriter in ein mit Photolack beschichtetes Substrat geschrieben und anschließend der belichtete Anteil des Photolacks entfernt. Ein belichtetes Original kann anschließend galvanisch abgeformt und somit ein Prägestempel erzeugt werden. Letztendlich wird die Struktur über einen Prägeprozess beispielsweise in UV-Lack auf Folie repliziert. Alternativ kann ein Nanoimprint-Verfahren eingesetzt werden. Dieses photolithographische Herstellungsverfahren bietet viele Gestaltungsmöglichkeiten in der Wahl der Geometrie der Mikrokavitäten. So können ohne Mehraufwand auch nicht rotationssymetrische bzw. nicht sphärische Geometrien von Mikrokavitäten realisiert werden.

Anschließend erfolgt eine Bedampfung der Oberfläche mit der den Farbeffekt bewirkenden Struktur, beispielsweise einer Colour-Shift-Beschichtung. Hierzu kommen unter anderem Elektronenstrahlbedampfen, Sputtern oder thermisches Verdampfen unter Vakuum infrage. Zum Abschluss wird die Struktur zum Schutz vorzugsweise mit einer Deckschicht kaschiert.

Die Strukturtiefe liegt in der Größenordnung der halben Strukturweite. Da man bei vielen Anwendungen eine maximale Dicke des Sicherheitselementes nicht überschreiten möchte, sind Strukturweiten kleiner 30 µm bevorzugt, um die Dicke des Sicherheitselementes möglichst gering zu halten. Eine Untergrenze für die Strukturweite liegt bei etwa 2 µm, bedingt durch das Beugungsverhalten des Lichtes an Strukturen in Größenordnungen der Wellenlänge. Denn für kleinere Strukturweiten nehmen der Streu- bzw. der Beugungsanteil des reflektierten Lichtes zu, wodurch der Anteil des spiegelnd bzw. spekular retroreflektierten Lichtes abnimmt. Ferner ist bevorzugterweise die Strukturweite der Mikrokavitäten so gewählt, dass eine einzelne Kavität nicht mehr vom Betrachter aufgelöst werden kann und somit ein Farbmischeffekt zwischen den unterschiedlichen Farbbereichen entsteht.

Die erfindungsgemäßen Mikrokavitäten können periodisch oder aperiodisch angeordnet sein. Bei einer periodischen Anordnung der Mikrokavitäten wirkt die Struktur zusätzlich als Beugungsgitter und ein Betrachter nimmt insbesondere bei einer Strukturweite oder Periode von weniger als 10 µm einzelne Beugungsordnungen wahr. Die beiden Effekte der Retroreflexion und der Gitterbeugung können vorteilsweise in einem Sicherheitsmerkmal kombiniert werden. Es ist allerdings auch möglich, den Effekt der Gitterbeugung durch die entsprechende Gestaltung der Struktur zum Verschwinden zu bringen. Hierzu muss die Position der einzelnen Mikrokavitäten zufällig angeordnet werden, also zufällig verteilt um ihre Sollposition herum. Somit überlagern sich die einzelnen reflektierten Lichtstrahlen nicht mehr konstruktiv und die Gitterbeugung wird unterdrückt. Im Gegenzug erhöht sich der Anteil des retroreflektierten Lichtes.

Das Sicherheitselement kann insbesondere als Sicherheitsfaden, Aufreißfaden, Sicherheitsband, Sicherheitsstreifen, Patch oder als Etikett ausgebildet sein. Insbesondere kann das Sicherheitselement transparente Bereiche oder Ausnehmungen überspannen.

Das Sicherheitselement kann insbesondere Teil einer noch nicht umlauffähige Vorstufe zu einem Wertdokument sein, das neben dem erfindungsgemäßen Sicherheitselement beispielsweise auch weitere Echtheitsmerkmale (wie z. B. im Volumen vorgesehene Lumineszenzstoffe) aufweisen kann. Unter Wertdokumenten werden hier einerseits das Sicherheitselement aufweisende Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsüberprüfung möglich ist und zugleich unerwünschte Kopien verhindert werden. Chip- oder Sicherheitskarten, wie z. B. Bank- oder Kreditkarten, sind weitere Beispiele für ein Wertdokument.

Das erfindungsgemäße Herstellungsverfahren kann so ausgebildet werden, dass die beschriebenen bevorzugten Ausbildungen und Ausführungsformen des Sicherheitselementes hergestellt werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Insbesondere kann auf das Merkmal der Perforation in allen bislang allgemein und nachfolgend noch im Detail erläuterten Ausführungsformen verzichtet werden.

Nachfolgend wird die Erfindung beispielshalber anhand der beigefügten Zeichnungen, die auch erfindungswesentliche Merkmale offenbaren, noch näher erläutert ist. Es zeigen:
- Fig. 1: eine Schemadarstellung durch eine Mikrokavitätenstruktur, wie sie in einer ersten Ausführungsform eines Sicherheitselementes zur Anwendung kommt,
- Fig. 2: eine Schemadarstellung ähnlich der Fig. 1, jedoch für eine andere Betrachtungsrichtung,
- Fig. 3: ein Diagramm zur Veranschaulichung erster und zweiter Bereiche in den Mikrokavitäten der Mikrokavitätenstruktur der Fig. 1 und Fig. 2,
- Fig. 4: eine schematische Schnittdarstellung eines Sicherheitselementes, das die Mikrokavitätenstruktur der Fig. 1 verwendet,
- Fig. 5 bis 7: schematische Schnittdarstellungen weiterer Sicherheitselemente ähnlich dem der Fig. 4,
- Fig. 8: eine Draufsicht auf die Mikrokavitätenstruktur des Sicherheitselementes der Fig. 4,
- Fig. 9: eine schematische Schnittdarstellung einer weiteren Ausführungsform eines Sicherheitselementes,
- Fig. 10: eine Draufsicht auf die Mikrokavitätenstruktur des Sicherheitselementes der Fig. 9,
- Fig. 11: eine Draufsicht auf eine Mikrokavitätenstruktur einer weiteren Ausführungsform eines Sicherheitselementes,
- Fig. 12 bis 14: Schemadarstellungen weiterer Sicherheitselemente, welche die Mikrokavitätenstruktur der Fig. 11 enthalten, und
- Fig. 15: eine Draufsicht auf eine weitere Mikrokavitätenstruktur für ein Sicherheitselement.

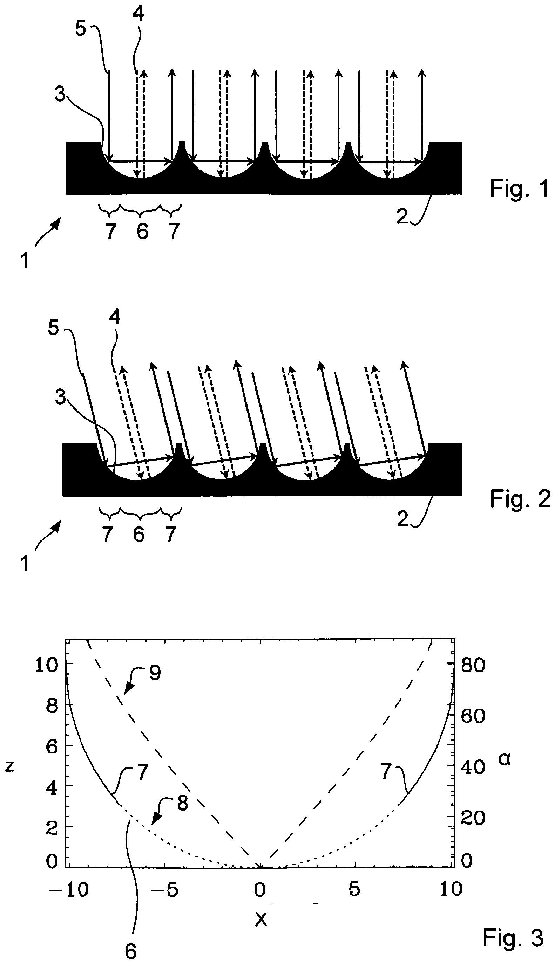

Fig. 1 zeigt schematisch eine Schnittdarstellung durch eine retroreflektierende Mikrokavitätenstruktur 1, die in einem Substrat gebildet ist. Auf seiner Oberseite weist dieses Substrat mehrere Mikrokavitäten 3 auf, die im gezeigten Fall als sphärische Vertiefungen ausgebildet sind. Die Vertiefungen sind reflektierend ausgeführt, beispielsweise durch eine geeignete Beschichtung (nicht dargestellt). Die Mikrokavitäten 3 wirken als Retroreflektoren, d. h. sie werfen Strahlung (z. B. Licht) in die Einfallsrichtung zurück. Fig. 1 zeigt den Fall für einen Einfall der Strahlung senkrecht auf die Oberfläche des Substrates 2, Fig. 2 die Situation bei einem schrägen Einfall.

Im Zentrum jeder Mikrokavität 3 einfallende Strahlung 4 wird durch einfache Reflexion zur Strahlungsquelle zurückgeworfen. Hingegen wird Strahlung 5, die am Rande der Mikrokavität 3 einfällt, in der Mikrokavität 3 zweimal umgelenkt und dann in Richtung der Strahlungsquelle reflektiert. Es bestehen somit in der Mikrokavität 3 zwei Bereiche 6, 7. In einem ersten Bereich 6 einfallende Strahlung wird direkt reflektiert. In einem zweiten Bereich 7, der den ersten Bereich 6 in Draufsicht auf die Oberfläche ringförmig umgibt, wird die Strahlung hingegen zweimal umgelenkt.

Die Bereiche 6 und 7 unterscheiden sich vor allem jedoch hinsichtlich des Auftreffwinkels, unter dem die Strahlung auf die Begrenzungsfläche jeder Mikrokavität 3 trifft. Dies ist schematisch in Fig. 3 dargestellt, die einen Querschnitt durch eine sphärische Mikrokavität 3 zeigt. Auf der x-Achse ist die radiale Koordinate aufgetragen. Auf der z-Achse die Höhenkoordinate. Die Kurve 8 zeigt die Oberfläche der Mikrokavität 3. Im Bereich 6 ist diese Oberfläche durch eine gestrichelte Linie symbolisiert, im Bereich 7 durch eine durchgezogene Linie. Es ist gut zu erkennen, dass bei radialen Koordinaten zwischen -7 und +7 der erste Bereich 6 vorliegt - dort einfallende Strahlung wird also nur einmal reflektiert. Bei größeren radialen Koordinaten einfallende Strahlung wird hingegen zweifach reflektiert. Die Auswirkung auf den Auftreffwinkel zeigt Kurve 9, für die die rechte Hochachse gilt, an der der Winkel α aufgetragen ist, unter dem die Strahlung auf die Oberfläche der Mikrokavität 3 auftrifft. Deutlich ist zu sehen, dass die zweifach reflektierte Strahlung, Strahlung also, die in den zweiten Bereich 7 einfällt, unter einem Winkel von etwa 45° und größer auf die Oberfläche trifft.

Der guten Ordnung halber sei darauf hingewiesen, dass die Fig. 3 die Situation für einen senkrechten Einfall der Strahlung wiedergibt. Für schräge Einfallswinkel verschieben sich die jeweiligen Bereiche etwas aus der Symmetrieachse. Die Bezirke 7 mit zweifacher Strahlreflexion sind jedoch für einen großen Einfallswinkelbereich vorhanden.

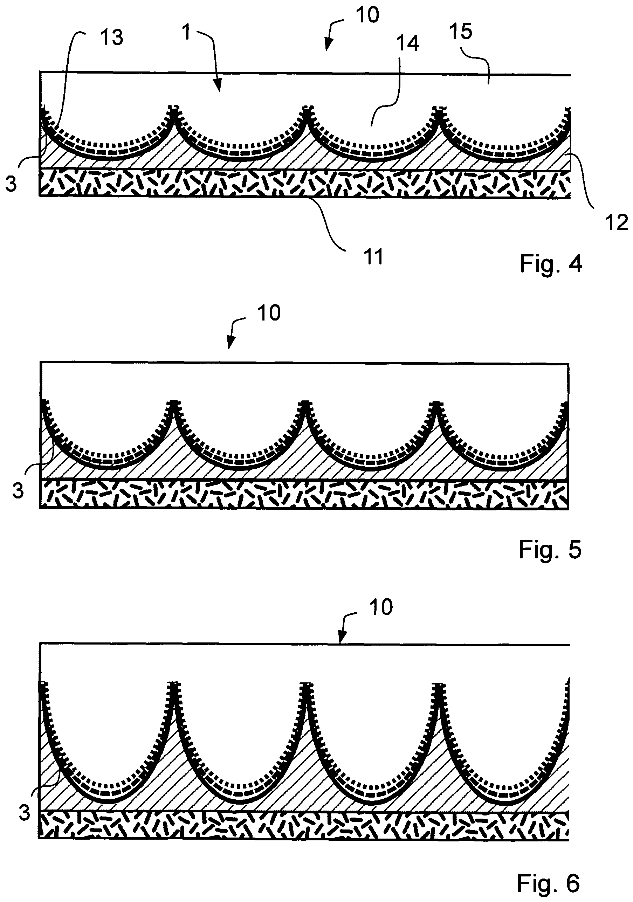

Die Bereiche 6, 7, die sich also hinsichtlich des Auftreffwinkels a, mit dem die im Endeffekt retroreflektierte Strahlung auf die Oberfläche der Mikrokavität 3 trifft, unterscheiden, wirken mit einer Schichtstruktur 13 zusammen, die auf die Oberfläche der Mikrokavitäten 3 aufgebracht ist. Dies ist in Fig. 4 zu erkennen, die eine Schnittdarstellung eines Sicherheitselementes 10 in einer ersten Ausführungsform zeigt. Das Sicherheitselement 10 ist auf einem Substrat 11 aufgebaut, auf das ein Prägelack 12 aufgebracht ist. In diesen Prägelack 12 ist, wie zuvor bereits im allgemeinen Teil der Beschreibung erläutert wurde, die Mikrokavitätenstruktur 1 eingeformt, die eine Vielzahl nebeneinanderliegender Mikrokavitäten 3 aufweist. Auf die Oberflächen der Mikrokavitäten 3 ist die Schichtstruktur 13 aufgebracht, deren wesentliches Merkmal eine einfallswinkelabhängige Dispersion ist. Die Schichtstruktur 13 bewirkt dadurch einen noch zu erläuternden Farbeffekt. Sie kann beispielsweise als bekannte Colour-Shift-Beschichtung ausgeführt werden. Solche Beschichtungen bestehen üblicherweise aus einer halbtransparenten Metallschicht, einer metallischen Spiegelschicht und einer dazwischen befindlichen, dielektrischen Abstandschicht. Sie reflektieren Licht mit einer Farbe, die vom Einfallswinkel abhängt, mit dem die Strahlung auf die Beschichtung auftrifft. Bekannt sind solche Colour-Shift-Beschichtungen für ebene Flächen, die einen regenbogenartigen Farbeffekt zeigen, wenn sie bei der Betrachtung gekippt werden.

Über der derart beschichteten Mikrokavität 3 ist eine Deckschicht aufgebracht, die sowohl bei 14 die Mikrokavitäten 3 ausfüllt, als auch mittels eines darüberliegenden Abschnittes 15 die Mikrokavitätenstruktur 1 eben abdeckt.

Die Figuren 5 und 6 veranschaulichen, wie die Tiefe der Mikrokavitäten 3 der Mikrokavitätenstruktur 1 entsprechend gewählt werden kann. Die Tiefe wirkt sich auf die Größe des ersten Bereiches 6 sowie des diesen umgebenden, zweiten Bereiches 7 aus. Eine einzelne Mikrokavität 3 ist in Draufsicht von der Oberfläche des Sicherheitselementes 10, d. h. in Sicht in der Zeichenebene der Figuren 4 bis 7 so gewählt, dass zum einen keine Beugungseffekte erfolgen, zum anderen eine einzelne Mikrokavität 3 mit unbewaffnetem Auge noch nicht aufgelöst werden kann. Ein Bereich zwischen 2 µm und 300 µm erfüllt diese Anforderung. Eine einzelne Mikrokavität 3 wirkt somit als einzelnes Pixel. Die Farbe, die dieses Pixel hat, hängt zum einen von der Schichtstruktur 13 ab, zum anderen vom Größenverhältnis zwischen erstem Bereich und zweitem Bereich. Im ersten Bereich bewirkt die Schichtstruktur 13 einen ersten Farbeffekt aufgrund der Einfallswinkel, die im ersten Bereich 6 vorliegen. Der zweimalige Durchlauf durch die Schichtstruktur 13 unter einen anderen Einfallswinkel im zweiten Bereich 7 hat einen zweiten Farbeffekt zur Folge. Da die Mikrokavitäten 3 so klein sind, dass sie mit dem Auge nicht aufgelöst werden können, vermittelt eine einzelne Mikrokavität 3 im Ergebnis dem Betrachter einen Farbeindruck, der sich durch die Mischung des ersten und des zweiten Farbeffektes ergibt. Das Mischungsverhältnis ist durch die Größenverhältnisse zwischen erstem Bereich 6 und zweitem Bereich 7 und damit im Ergebnis durch die Geometrie der Mikrokavität 3 vorgegeben.

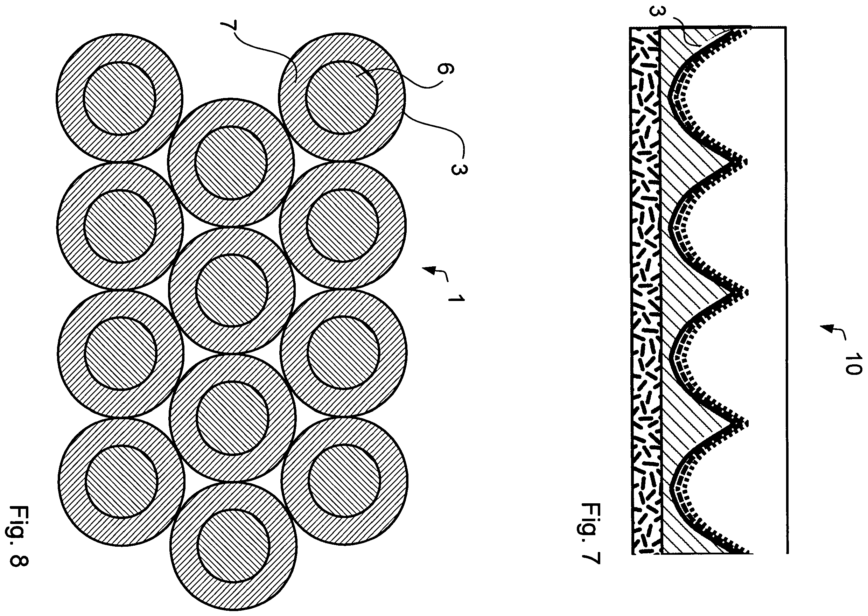

Das Sicherheitselement 10 ist natürlich nicht auf eine Mikrokavitätenstruktur 1 mit sphärischen Vertiefungen für die Mikrokavitäten 3 beschränkt. Fig. 7 zeigt exemplarisch eine asphärische Vertiefungsstruktur für die Mikrokavitäten 3.

Fig. 8 zeigt in einer Draufsicht die unterschiedlichen Flächenanteile der ersten Bereiche 6 (von links unten nach rechts oben schraffiert) und der zweiten Bereiche 7 (von rechts unten nach links oben schraffiert) der Mikrokavitäten 3 in der Mikrokavitätenstruktur 1. Eine Vielzahl an Mikrokavitäten 3 mit ersten Bereichen 6 und zweiten Bereichen 7 liegen nebeneinander. Jede Mikrokavität 3 wirkt als Pixel mit der bereits erwähnten Farbmischung.

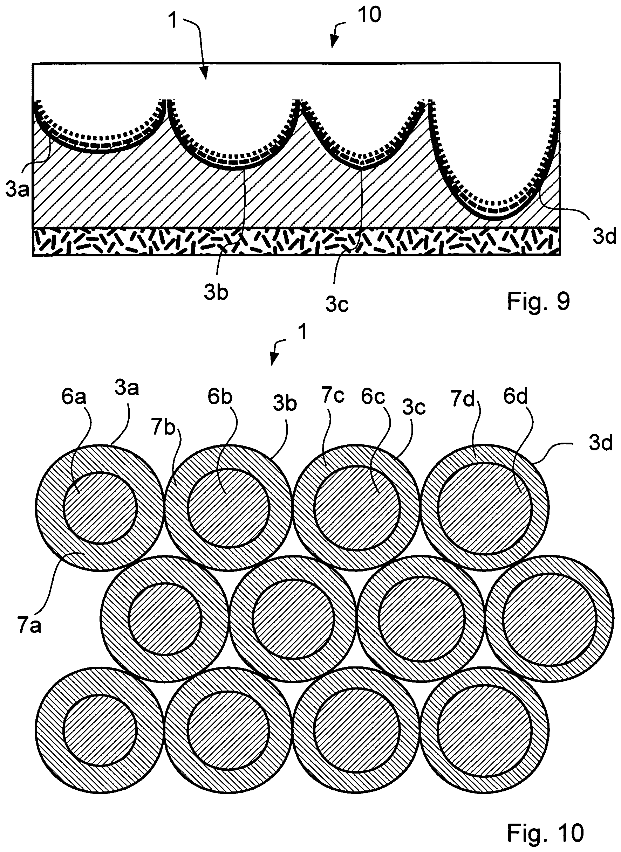

Die Farbe jedes Pixels kann nun durch verschiedene Geometrien der Mikrokavitäten 3 in der Mikrokavitätenstruktur 1 eingestellt werden. Dies ist schematisch in den Figuren 9 und 10 dargestellt. Fig. 9 zeigt eine Schnittdarstellung entsprechend den Figuren 4 bis 7. Hier sind nun die Mikrokavitäten mit unterschiedlichen Geometrien ausgestaltet. Exemplarisch sind vier Mikrokavitäten 3a, 3b, 3c und 3d eingezeichnet, deren Tiefe zunimmt. Mit zunehmender Tiefe ändert sich der Anteil, den der erste Bereich an der in Draufsicht zu sehenden Fläche der Mikrokavität hat. Somit ändern sich die Flächenverhältnisse zwischen erstem Bereich und zweitem Bereich. Fig. 10 zeigt entsprechend, dass das Flächenverhältnis zwischen erstem Bereich 6a und zweitem Bereich 7a bei der flachsten Mikrokavität 3a anders ist, als bei der etwas tieferen Mikrokavität 3b, der deutlich tieferen Mikrokavität 3c oder der tiefsten Mikrokavität 3d. Somit ist das Mischungsverhältnis, das sich zwischen erstem und zweitem Farbeffekt einstellt, für die vier Mikrokavitäten 3a bis 3d unterschiedlich und jede Mikrokavität vermittelt einem Betrachter einen anderen Farbeindruck. Dies ermöglicht es auf einfache Weise, Motive zu gestalten, da lediglich die Geometrie der Mikrokavitäten 3 im Herstellungsprozess, z. B. durch unterschiedliche Belichtungsintensitäten beim photolithographischen Prozess, variiert werden muss. Die Schichtstruktur 13 hingegen muss nicht variiert werden, sie kann für alle Mikrokavitäten 3 der Mikrokavitätenstruktur 1 identisch bleiben, was unter Herstellungsgesichtspunkten sehr vorteilhaft ist.

Die Verwendung von Mikrokavitätenstrukturen 1, die als Retroreflektoren wirken, ist jedoch nicht auf rotationssymmetrische Mikrokavitäten beschränkt. Zwar haben diese die Eigenschaft, dass die optische Wirkung in zwei Raumrichtungen unabhängig von der Betrachtungsrichtung ist, jedoch kann auch die Verwendung von Retroreflektoren, die lediglich in einer Raumrichtung unempfindlich für Variationen der Betrachtungsrichtung sind, ein sehr fälschungssicheres Sicherheitselement 10 erreichen.

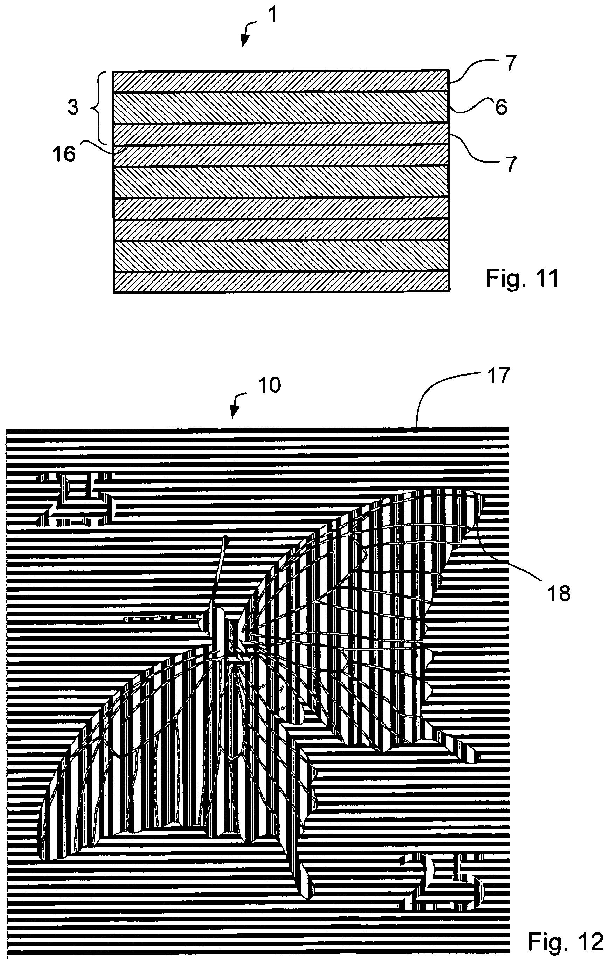

Die Draufsicht auf eine entsprechende Mikrokavitätenstruktur 1 zeigt die Fig. 11. Hier sind die Mikrokavitäten 3 nun als längliche Rillen ausgebildet, die nebeneinanderliegen. In Fig. 11 ist zur besseren Übersichtlichkeit eine Grenze 16 zwischen zwei benachbarten Mikrokavitäten 3 eingezeichnet. Die Mikrokavität 3 entspricht in einem in der Darstellung der Fig. 4 vertikal verlaufenden Schnitt den Ansichten, wie sie in den Figuren 4 bis 7 und 9 gezeigt wurden. In horizontaler Richtung sind die Mikrokavitäten als längliche Rillen ausgebildet. In dieser Richtung sind sie also so lange, dass sie mit unbewaffnetem Auge aufgelöst werden können. Da ist aber nicht zwingend. Die Länge zumindest einiger Rillen kann auch unter der Erkennbarkeitsgrenze liegen.

Eine derartige Mikrokavitätenstruktur erlaubt es nun, eine Farbe zwischen einem Motiv und seinem Hintergrund einzustellen, die von der Betrachtungsrichtung abhängt. Ein solches Sicherheitselement 10 ist exemplarisch in Fig. 12 dargestellt. Es umfasst Bereiche 17, in denen die Richtung, längs welcher sich die Mikrokavitäten 3 erstrecken, beispielsweise horizontal verläuft. In Bereichen 18 liegt die Längsrichtung der rinnenförmigen Mikrokavitäten 3 hingegen vertikal. Die Kavitäten des Motivs sind also mit ihrer Hauptrichtung senkrecht zu den Kavitäten des Hintergrunds orientiert. Jede Mikrokavität ist nun so beschichtet, dass das Muster bei schräger Betrachtung in zwei Farben erscheint. Es wird nun je nach Betrachtungsrichtung ein unterschiedlicher Farbeffekt realisiert, da nur für einen der beiden Bezirke 17 und 18 die eingangs erwähnte Farbmischung eintritt. Dreht man das Sicherheitselement in der Betrachtungsebene um 90°, tritt eine Farbvertauschung zwischen Muster und Hintergrund, also zwischen erstem Bezirk 17 und zweitem Bezirk bzw. zweiten Bezirken 18 auf.

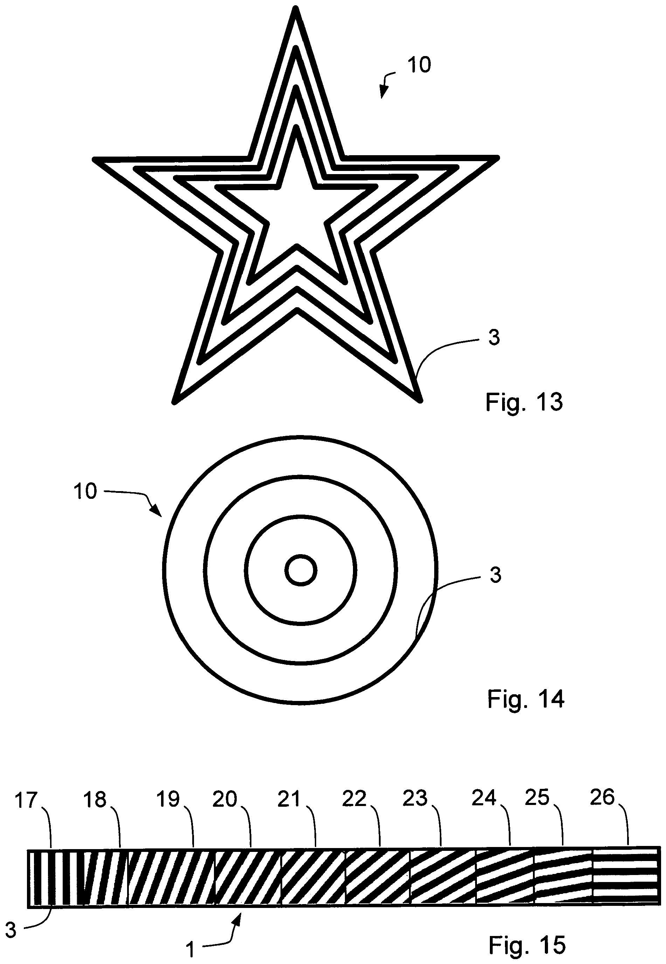

Die Figuren 13 und 14 zeigen, dass eine unterschiedliche Orientierung nicht rotationssymmetrischer Mikrokavitäten 3 natürlich nicht auf senkrecht zueinanderstehende Anordnungen beschränkt ist. Durch eine kontinuierliche Variation der Längsrichtung solcher nicht rotationssymmetrischer Mikrokavitäten 3 können auch Pump- und Laufeffekte realisiert werden. Fig. 13 zeigt ein Sicherheitselement 10, dessen Mikrokavitätenstruktur 1 durch sternförmig verlaufende Mikrokavitäten gebildet ist. Fig. 14 dient als Beleg dafür, dass die Mikrokavitäten auch nicht geradlinig ausgeführt werden können. In der Figur sind sie exemplarisch kreisförmig.

Fig. 15 zeigt schließlich eine Draufsicht auf eine Mikrokavitätenstruktur 1, die Bereiche 17 bis 26 umfasst, in denen die Längsrichtung der rinnenförmigen Mikrokavitäten 3 jeweils um 10° zum jeweils nächsten Bezirk variiert. Die Grenzlinien zwischen den Bezirken sind dabei nur zur Verdeutlichung in die Zeichnung eingetragen.

### Bezugszeichenliste

- 1: Mikrokavitätenstruktur
- 2: Substrat
- 3: Mikrokavität
- 4: Lichtstrahl
- 5: Lichtstrahl
- 6: erster Bereich
- 7: zweiter Bereich
- 8,9: Kurve
- 10: Sicherheitselement
- 11: Substrat
- 12: Prägelack
- 13: Schichtstruktur
- 14,15: Deckschicht
- 16: Grenze
- 17 bis 26: Bezirk

## Patentansprüche

1. Sicherheitselement zur Herstellung von Wertdokumenten, wie Banknoten, Schecks oder dergleichen, das eine Oberseite aufweist, auf der eine Mikrokavitätenstruktur (1) ausgebildet ist, die eine Vielzahl nebeneinanderliegender Mikrokavitäten (3) aufweist, wobei auf den Mikrokavitäten (3) eine einen Farbeffekt bewirkende Struktur (13) ausgebildet ist, die eine einfallswinkelabhängige Dispersion aufweist, **dadurch gekennzeichnet, dass** die Mikrokavitäten (3) jeweils für einen vorgegebenen Einfallswinkelbereich auf die Oberseite einfallender Strahlung (5) von ± 10° oder mehr als Retroreflektoren ausgebildet sind, die einen ersten Bereich (6), in dem sie innerhalb des Einfallswinkelbereichs auf die Oberseite einfallende Strahlung (4) einfach reflektieren, und einen zweiten Bereich (7) aufweisen, in dem sie innerhalb des Einfallswinkelbereichs auf die Oberseite einfallende Strahlung (5) mehrfach reflektieren, so dass durch die einfallswinkelabhängige Dispersion der den Farbeffekt bewirkenden Struktur (13) am ersten Bereich (6) einfach reflektierte Strahlung (4) innerhalb des Einfallswinkelbereichs von der Oberseite gesehen einen anderen Farbeffekt zeigt, als am zweiten Bereich (7) mehrfach reflektierte Strahlung (5).

2. Sicherheitselement nach Anspruch 1, **dadurch gekennzeichnet, dass** die den Farbeffekt bewirkende Struktur als Colour-Shift-Beschichtung (13) ausgebildet ist.

3. Sicherheitselement nach Anspruch 1 oder 2, **dadurch gekennzeichnet, dass** die Mikrokavitätenstruktur (1) Mikrokavitäten (3) aufweist, die als sphärische, asphärische oder elliptische Vertiefungen oder in Form einer Freiformfläche ausgebildet sind.

4. Sicherheitselement nach einem der obigen Ansprüche, **dadurch gekennzeichnet, dass** die Mikrokavitätenstruktur (1) Mikrokavitäten (3) aufweist, die als nicht rotationssymmetrische Vertiefungen ausgebildet sind.

5. Sicherheitselement nach Anspruch 4, **dadurch gekennzeichnet, dass** die Mikrokavitäten (3) als rinnenförmige Vertiefungen ausgebildet sind

6. Sicherheitselement nach Anspruch 3, 4 oder 5, **dadurch gekennzeichnet, dass** die Mikrokavitätenstruktur (1) mehrere Bezirke (17 bis 26) aufweist, in denen jeweils nicht rotationssymmetrische Mikrokavitäten ausgebildet sind, die sich alle längs einer Hauptrichtung erstrecken, wobei die Hauptrichtungen der Bezirke (17 bis 26) sich unterscheiden.

7. Sicherheitselement nach einem der obigen Ansprüche, **dadurch gekennzeichnet, dass** die Mikrokavitäten zumindest in einer Richtung, welche parallel zur Oberfläche liegt, eine Ausdehnung haben, die zwischen 2 µm und 300 µm beträgt.

8. Wertdokument mit einem Sicherheitselement (10) nach einem der Ansprüche 1 bis 7.

9. Herstellungsverfahren für ein Sicherheitselement (10) für Wertdokumente, wie Banknoten, Schecks oder dergleichen, wobei ein Substrat (11, 12) bereitgestellt wird, das eine Oberseite aufweist, auf der Oberseite eine Mikrokavitätenstruktur (1) ausgebildet wird, die eine Vielzahl nebeneinanderliegender Mikrokavitäten (3) aufweist, und auf den Mikrokavitäten (3) eine einen Farbeffekt bewirkende Struktur (13) ausgebildet wird, wobei die den Farbeffekt bewirkende Struktur (13) mit einer einfallswinkelabhängigen Dispersion versehen wird, **dadurch gekennzeichnet, dass** die Mikrokavitäten (3) jeweils für einen vorgegebenen Einfallswinkelbereich auf die Oberseite einfallender Strahlung (5) von ± 10° oder mehr als Retroreflektoren ausgebildet werden, die einen ersten Bereich (6), in dem sie innerhalb des Einfallswinkelbereichs auf die Oberseite einfallende Strahlung (4) einfach reflektieren, und einen zweiten Bereich (7) aufweisen, in dem sie innerhalb des Einfallswinkelbereichs auf die Oberseite einfallende Strahlung (5) mehrfach reflektieren, so dass durch die einfallswinkelabhängige Dispersion der den Farbeffekt bewirkenden Struktur (13) am ersten Bereich (6) einfach reflektierte Strahlung (4) innerhalb des Einfallswinkelbereichs von der Oberseite gesehen einen anderen Farbeffekt zeigt, als am zweiten Bereich (7) mehrfach reflektierte Strahlung (5).

10. Herstellungsverfahren nach Anspruch 9, **dadurch gekennzeichnet, dass** die den Farbeffekt bewirkende Struktur als Colour-Shift-Beschichtung (13) ausgebildet wird.

11. Herstellungsverfahren nach Anspruch 9 oder 10, **dadurch gekennzeichnet, dass** die Mikrokavitätenstruktur (1) mit Mikrokavitäten (3) versehen wird, die als sphärische, asphärische oder elliptische Vertiefungen oder in Form einer Freiformfläche ausgebildet werden.

12. Herstellungsverfahren nach einem der Ansprüche 9 bis 11, **dadurch gekennzeichnet, dass** die Mikrokavitätenstruktur (1) mit Mikrokavitäten (3) versehen wird, die als nicht rotationssymmetrische Vertiefungen ausgebildet werden.

13. Herstellungsverfahren nach Anspruche 12, **dadurch gekennzeichnet, dass** die Mikrokavitäten (3) als rinnenförmige Vertiefungen ausgebildet werden.

14. Herstellungsverfahren nach einem der Ansprüche 9 bis 13, **dadurch gekennzeichnet, dass** in der Mikrokavitätenstruktur (1) mehrere Bezirke (17 bis 26) ausgebildet werden, in denen jeweils nicht rotationssymmetrische Mikrokavitäten (3) ausgebildet werden, die sich alle längs einer Hauptrichtung erstrecken, wobei die Hauptrichtungen der Bezirke (17 bis 26) sich unterscheiden.

## Claims

1. Security element for producing valuable documents, such as banknotes, cheques or the like, having an upper side, formed on which is a microcavity structure (1) having a multiplicity of microcavities (3) which are located one next to the other, wherein a structure (13) effecting a colour effect is formed on the microcavities (3), which structure has an angle-of-incidence-dependent dispersion, **characterized in that** the microcavities (3) are each embodied for a specified angle-of-incidence range of radiation (5) that is incident on the upper side of ± 10° or more as retroreflectors that have a first region (6), in which they once reflect radiation (4) that is incident on the upper side within the angle-of-incidence range, and have a second region (7), in which they reflect multiple times radiation (5) that is incident on the upper side within the angle-of-incidence range, such that, due to the angle-of-incidence-dependent dispersion of the structure (13) effecting the colour effect, radiation (4) that is reflected once at the first region (6) within the angle-of-incidence range displays, viewed from the upper side, a different colour effect than radiation (5) which is reflected multiple times at the second region (7).

2. Security element according to Claim 1, **characterized in that** the structure effecting the colour effect is embodied as a colour shift coating (13).

3. Security element according to Claim 1 or 2, **characterized in that** the microcavity structure (1) has microcavities (3), which are embodied in the form of spherical, aspheric or elliptical depressions or in the form of a free-form surface.

4. Security element according to one of the preceding claims, **characterized in that** the microcavity structure (1) has microcavities (3) which are embodied as non-rotationally symmetric depressions.

5. Security element according to Claim 4, **characterized in that** the microcavities (3) are embodied as trough-shaped depressions.

6. Security element according to Claim 3, 4 or 5, **characterized in that** the microcavity structure (1) has a plurality of zones (17 to 26), in which are respectively formed non-rotationally symmetric microcavities which all extend in a main direction, wherein the main directions of the zones (17 to 26) differ.

7. Security element according to one of the preceding claims, **characterized in that** the microcavities have an extent of between 2 µm and 300 µm at least in one direction that is parallel to the surface.

8. Valuable document having a security element (10) according to one of Claims 1 to 7.

9. Production method for a security element (10) for valuable documents, such as banknotes, cheques or the like, wherein provided is a substrate (11, 12) having an upper side, a microcavity structure (1) having a multiplicity of microcavities (3) which are located one next to the other is formed on the upper side, and a structure (13) effecting a colour effect is formed on the microcavities (3), wherein the structure (13) effecting the colour effect is provided with an angle-of-incidence-dependent dispersion, **characterized in that** the microcavities (3) are each embodied for a specified angle-of-incidence range of radiation (5) that is incident on the upper side of ± 10° or more as retroreflectors that have a first region (6), in which they once reflect radiation (4) that is incident on the upper side within the angle-of-incidence range, and have a second region (7), in which they reflect multiple times radiation (5) that is incident on the upper side within the angle-of-incidence range, such that, due to the angle-of-incidence-dependent dispersion of the structure (13) effecting the colour effect, radiation (4) that is reflected once at the first region (6) within the angle-of-incidence range displays, viewed from the upper side, a different colour effect than radiation (5) which is reflected multiple times at the second region (7).

10. Production method according to Claim 9, **characterized in that** the structure effecting the colour effect is embodied as a colour shift coating (13).

11. Production method according to Claim 9 or 10, **characterized in that** the microcavity structure (1) is provided with microcavities (3), which are embodied in the form of spherical, aspheric or elliptical depressions or in the form of a free-form surface.

12. Production method according to one of Claims 9 to 11, **characterized in that** the microcavity structure (1) is provided with microcavities (3) which are embodied as non-rotationally symmetric depressions.

13. Production method according to Claim 12, **characterized in that** the microcavities (3) are embodied as trough-shaped depressions.

14. Production method according to one of Claims 9 to 13, **characterized in that** formed in the microcavity structure (1) are a plurality of zones (17 to 26), in which are respectively formed non-rotationally symmetric microcavities (3) which all extend in a main direction, wherein the main directions of the zones (17 to 26) differ.

## Revendications

1. Elément de sécurité pour la fabrication de documents de valeur, comme des billets de banque, des chèques ou similaires, qui présente une face supérieure sur laquelle est formée une structure de microcavités (1) qui présente une multiplicité de microcavités juxtaposées (3), dans lequel une structure (13) provoquant un effet coloré, qui présente une dispersion dépendant de l'angle d'incidence, est formée sur les microcavités (3), **caractérisé en ce que** les microcavités (3) sont réalisées sous forme de rétro-réflecteurs pour une plage d'angles d'incidence prédéterminée d'un rayonnement (5) incident sur la face supérieure de ± 10° ou plus, qui présentent une première région (6), dans laquelle ils réfléchissent une seule fois un rayonnement (4) incident sur la face supérieure à l'intérieur de la plage d'angles d'incidence et une deuxième région (7), dans laquelle ils réfléchissent plusieurs fois un rayonnement (5) incident sur la face supérieure à l'intérieur de la plage d'angles d'incidence, de telle manière que par la dispersion dépendant de l'angle d'incidence de la structure (13) provoquant l'effet coloré, un rayonnement (4) réfléchi une seule fois sur la première région (6) vu de la face supérieure à l'intérieur de la plage d'angles d'incidence montre un autre effet coloré qu'un rayonnement (5) réfléchi plusieurs fois sur la deuxième région (7).

2. Elément de sécurité selon la revendication 1, **caractérisé en ce que** la structure provoquant l'effet coloré est formée par un revêtement Colour Shift (13).

3. Elément de sécurité selon la revendication 1 ou 2, **caractérisé en ce que** la structure de microcavités (1) présente des microcavités (3), qui sont réalisées sous forme de creux sphériques, asphériques ou elliptiques ou sous la forme d'une surface de forme libre.

4. Elément de sécurité selon l'une quelconque des revendications précédentes, **caractérisé en ce que** la structure de microcavités (1) présente des microcavités (3), qui sont réalisées sous forme de creux n'ayant pas la symétrie de révolution.

5. Elément de sécurité selon la revendication 4, **caractérisé en ce que** les microcavités (3) sont réalisées sous forme de creux en forme de sillons.

6. Elément de sécurité selon la revendication 3, 4 ou 5, **caractérisé en ce que** la structure de microcavités (1) présente plusieurs zones (17 à 26), dans lesquelles sont formées respectivement des microcavités n'ayant pas la symétrie de révolution, qui s'étendent toutes le long d'une direction principale, dans lequel les directions principales des zones (17 à 26) sont différentes l'une de l'autre.

7. Elément de sécurité selon l'une quelconque des revendications précédentes, **caractérisé en ce que** les microcavités ont une extension, qui vaut entre 2 µm et 300 µm, au moins dans une direction qui est parallèle à la surface.

8. Document de valeur doté d'un élément de sécurité (10) selon l'une quelconque des revendications 1 à 7.

9. Procédé de fabrication d'un élément de sécurité (10) pour des documents de valeur, comme des billets de banque, des chèques ou similaires, dans lequel on prépare un substrat (11, 12), qui présente une face supérieure, on forme sur la face supérieure une structure de microcavités (1), qui présente une multiplicité de microcavités juxtaposées (3), et on forme sur les microcavités (3) une structure (13) provoquant un effet coloré, dans lequel la structure (13) provoquant un effet coloré est dotée d'une dispersion dépendant de l'angle d'incidence, **caractérisé en ce que** l'on réalise les microcavités (3) sous forme de rétro-réflecteurs respectivement pour une plage d'angle d'incidence prédéterminée d'un rayonnement (5) incident sur la face supérieure de ± 10° ou plus, qui présentent une première région (6), dans laquelle ils réfléchissent une seule fois un rayonnement (4) incident sur la face supérieure à l'intérieur de la plage d'angles d'incidence et une deuxième région (7), dans laquelle ils réfléchissent plusieurs fois un rayonnement (5) incident sur la face supérieure à l'intérieur de la plage d'angles d'incidence, de telle manière que par la dispersion dépendant de l'angle d'incidence de la structure (13) provoquant l'effet coloré, un rayonnement (4) réfléchi une seule fois sur la première région (6) vu de la face supérieure à l'intérieur de la plage d'angles d'incidence montre un autre effet coloré qu'un rayonnement (5) réfléchi plusieurs fois sur la deuxième région (7).

10. Procédé de fabrication selon la revendication 9, **caractérisé en ce que** l'on réalise la structure (13) provoquant l'effet coloré sous la forme d'un revêtement Colour Shift (13).

11. Procédé de fabrication selon la revendication 9 ou 10, **caractérisé en ce que** la structure de microcavités (1) est dotée de microcavités (3), qui sont réalisées sous forme de creux sphériques, asphériques ou elliptiques, ou sous la forme d'une surface de forme libre.

12. Procédé de fabrication selon l'une quelconque des revendications 9 à 11, **caractérisé en ce que** la structure de microcavités (1) est dotée de microcavités (3), qui sont réalisées sous forme de creux n'ayant pas la symétrie de révolution.

13. Procédé de fabrication selon la revendication 12, **caractérisé en ce que** l'on réalise les microcavités (3) sous forme de creux en forme de sillons.

14. Procédé de fabrication selon l'une quelconque des revendications 9 à 13, **caractérisé en ce que** l'on forme dans la structure de microcavités (1) plusieurs zones (17 à 26), dans lesquelles on réalise respectivement des microcavités (3) n'ayant pas la symétrie de révolution, qui s'étendent toutes le long d'une direction principale, dans lequel les directions principales des zones (17 à 26) sont différentes l'une de l'autre.
